# FASCICULE DE BREVET EUROPEEN

(11) **EP 2 300 313 B1**
(45) Date de publication et mention de la délivrance du brevet: **05.03.2014**
(21) Numéro de dépôt: 09784412.0
(22) Date de dépôt: 19.06.2009
(51) Int. Cl.: B64C 1/06, B29C 70/68, B29C 70/48

(54) **ELÉMENT DE FUSELAGE D'AÉRONEF**
FLUGZEUGRUMPFELEMENT
AIRCRAFT FUSELAGE ELEMENT

(30) Priorité: 26.06.2008 FR 0854266
(43) Date de publication de la demande: 30.03.2011
(73) Titulaire: AIRBUS OPERATIONS (S.A.S), 31060 Toulouse (FR)
(72) Inventeur: Mahieu, Benjamin, 31300 Toulouse (FR)
(74) Mandataire: Gicquel, Olivier Yves Gérard
(86) Numéro de dépôt international: PCT/FR2009/051172
(87) Numéro de publication internationale: WO 2010/004157

(56) Documents cités:
- DE-C- 915 063
- FR-A- 808 710
- FR-A- 880 181
- GB-A- 759 529
- GB-A- 2 196 922

## Description

La présente invention appartient au domaine de l'aéronautique et en particulier des fuselages d'aéronef. Plus précisément, l'invention concerne un élément de fuselage d'aéronef d'un seul tenant en matériau composite.

Le fuselage constitue le corps de l'aéronef sur lequel sont notamment montés la voilure, les trains d'atterrissage et les organes de stabilisation.

Un fuselage est typiquement un corps creux formé de panneaux métalliques montés et fixés sur une ossature métallique. Les panneaux métalliques forment une fois rivetés la peau externe de l'aéronef.

Or, il est connu que des imperfections de fabrication empêchent l'obtention d'une surface externe du fuselage lisse et hermétique, ce qui génère l'apparition d'une traînée aérodynamique lorsque l'avion est en vol. Ces imperfections résultent notamment des tolérances d'assemblage de ces panneaux pour former la peau externe de l'avion. A titre purement illustratif, on citera notamment l'existence d'un désaffleurement entre panneaux adjacents.

Par ailleurs, le fuselage étant entièrement métallique, il présente l'inconvénient d'être lourd.

Il en résulte une surconsommation de kérosène qui est non seulement contraire aux intérêts économiques des compagnies exploitant ce type d'aéronef mais aussi aux exigences environnementales.

L'art antérieur connaît des fuselages en métal coniques assemblés en sections encastrées formant la peau externe, certaines des sections intégrant des cadres, voir le brevet FR 808 710, ainsi que des éléments de liaison de sections de fuselage métalliques comprenant une surépaisseur de la peau, voir le brevet FR 880 181.

Les constructeurs aéronautiques ont donc cherché à alléger la masse du fuselage en remplaçant certaines parties métalliques par des éléments en matériaux composites.

A titre illustratif, ces matériaux composites sont mis en oeuvre dans la fabrication du carénage ventral de l'avion.

Toutefois, le recours aux matériaux composites dans la fabrication d'un aéronef, et notamment de ses pièces structurelles, est encore trop limité.

L'utilisation de ces matériaux est de plus réservée à la fabrication de pièces simples. Dans le cas d'un tronçon de peau externe, il est donc nécessaire de procéder ensuite à la mise en place et à la fixation de groupes de pièces ou de pièces individuelles pour former l'ossature interne ou encore les encadrements de hublot par exemple.

La fabrication de l'ensemble de ces éléments, puis leur assemblage, sont longs et coûteux.

Enfin, cet assemblage affaiblit la structure générale de l'aéronef et peut être source d'incidents liés à des erreurs humaines.

L'objectif de la présente invention est donc de proposer un élément de fuselage d'aéronef qui soit simple dans sa conception et dans son mode opératoire, cet élément de fuselage étant d'un seul tenant et intégrant directement un cadre et éventuellement une traverse, un encadrement de hublot, ou encore une portion de case de train.

A cet effet, l'invention concerne un élément de fuselage d'aéronef. Selon l'invention,
- cet élément de fuselage étant d'un seul tenant, il comprend une paroi fermée délimitant un volume interne, la surface externe de cette paroi formant la peau externe du fuselage,
- la paroi présente une coupe comportant du côté du volume interne une partie médiane plane, un élément de liaison mâle à une première extrémité et un élément de liaison femelle à son autre extrémité, lesdits éléments de liaison étant placés en saillie, chacun de ces éléments de liaison étant destiné à coopérer avec l'élément de liaison correspondant d'un autre élément de fuselage placé bord à bord à cet élément de fuselage en vue de solidariser longitudinalement l'un à l'autre ces éléments de fuselage,
- un des éléments de liaison comprend une marche formant un cadre du fuselage.

L'élément de fuselage ainsi obtenu étant d'un seul tenant et obtenu par moulage, la surface externe de cet élément est parfaitement lisse et ne génère pas de traînée aérodynamique. Un seul moule femelle suffit avantageusement à la fabrication de l'ensemble des éléments de fuselage de section constante.

L'élément de fuselage n'est pas forcément cylindrique et peut avoir toute autre forme telle qu'ovale ou ovoïde.

De plus, on s'affranchit des problèmes liés à l'assemblage puisque l'élément de fuselage est fonctionnalisé lors de sa fabrication et intègre directement un cadre et plus généralement des éléments transversaux de l'ossature apparaissant périodiquement à chaque inter cadre, c'est-à-dire dans un espace entre deux cadres successifs.

On entend par "un seul tenant" que l'élément de fuselage est d'une seule pièce, et ne résulte pas, par conséquent, d'un assemblage d'une pluralité de pièces initialement distinctes.

On entend par "solidariser longitudinalement", placer bord à bord les éléments de fuselage en vue de les emboîter par la coopération des éléments de liaison mâle et femelle placés ainsi en regard, et de les assembler pour former un tronçon de fuselage d'aéronef.

On entend par "élément de liaison correspondant" que lorsque l'élément de liaison d'un premier élément de fuselage est un élément de liaison mâle, ou inversement femelle, l'élément de liaison du second élément de fuselage placé bord à bord avec ce premier élément de fuselage en vue de leur assemblage est un élément de liaison femelle, ou inversement mâle.

Dans différents modes de réalisation particuliers de cet élément de fuselage d'aéronef, chacun ayant ses avantages particuliers et susceptibles de nombreuses combinaisons techniques possibles:
- cet élément étant en matériau composite, les éléments de liaison mâle et femelle sont continus ou non sur tout le tour de la paroi fermée,
Les éléments de liaison peuvent être continus, c'est-à-dire qu'ils sont placés en saillie par rapport à la partie médiane de la paroi sur tout le pourtour du côté du volume interne de la paroi fermée. Alternativement, ils peuvent ne pas être continus et ainsi formés des îlots de surépaisseur.
- l'élément de liaison femelle comprenant un décrochement de la paroi par rapport à sa partie médiane, l'élément de liaison mâle est une surépaisseur destinée à être reçue au moins partiellement dans ce décrochement,
On entend par "décrochement de la paroi par rapport à sa partie médiane" que la surface externe de la paroi en cet endroit est décalée du côté du volume interne par rapport à la surface externe de la paroi dans sa partie médiane. A titre purement illustratif, ce décrochement peut être relié à la partie médiane de sorte à former une marche franche, c'est-à-dire que le décrochement est relié à cette partie médiane par une portion de paroi perpendiculaire ou sensiblement perpendiculaire au plan passant par la partie médiane.
- ce décrochement est relié à la partie médiane par une dénivellation destinée à compenser la différence de hauteur entre ce décrochement et la partie médiane,
Cette dénivellation peut, par exemple, être obtenue en posant des plis morts, de la résine ou un matériau basse densité.
- l'élément de fuselage comporte des portions de lisse placées au moins sur la partie médiane de la paroi.
Ces portions de lisse sont réparties régulièrement ou non sur tout le tour de la paroi fermée du côté du volume interne.

L'invention concerne également un fuselage d'aéronef. Selon l'invention, le fuselage comprend des éléments de fuselage tels que décrits précédemment, lesquels sont solidarisés longitudinalement les uns aux autres.

Les axes longitudinaux de ces éléments de fuselage sont aux tolérances d'assemblage près confondus et forment l'axe longitudinal du fuselage.

L'assemblage des éléments de fuselage est réalisé par collage, rivetage ou encore co-cuisson.

Enfin, l'invention concerne un aéronef équipé d'au moins un élément de fuselage tel que décrit précédemment.

L'invention sera décrite plus en détail en référence aux dessins annexés dans lesquels:
- la figure 1 est une vue en perspective d'un élément de fuselage selon un premier mode de réalisation de l'invention;
- la figure 2 est une vue en coupe de l'élément de fuselage de la Figure 1 selon l'axe longitudinal de l'élément de fuselage;
- la figure 3 montre schématiquement un ensemble d'éléments de fuselage de la Figure 1 assemblés entre eux longitudinalement pour former un tronçon de fuselage d'aéronef de section constante;
- la figure 4 est une vue en coupe du tronçon de fuselage de la Figure 3;
- la figure 5 est une vue en perspective et élargie d'un élément de fuselage selon un deuxième mode de réalisation de l'invention;
- la figure 6 est une vue éclatée et en perspective d'une pointe avant réalisée à partir d'éléments de fuselage selon un troisième mode de réalisation de l'invention;

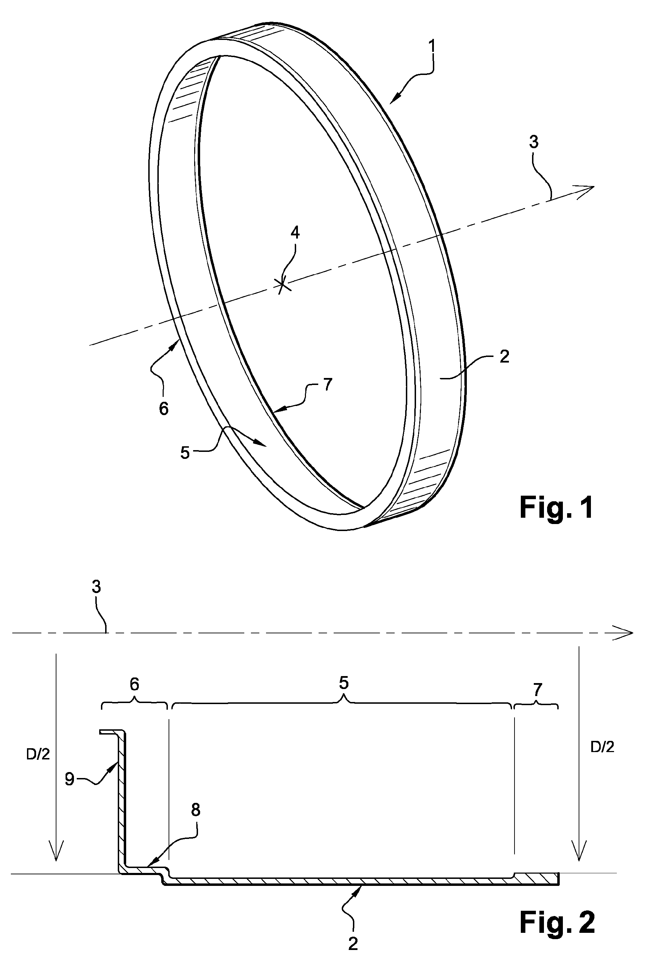

Les Figures 1 et 2 montrent un élément de fuselage selon un mode de réalisation particulier de l'invention. Cet élément de fuselage qui est d'un seul tenant et cylindrique, est réalisé en matériau composite.

La section des éléments de fuselage étant constante et de diamètre D, chaque élément de fuselage est avantageusement fabriqué à l'aide d'un moule unique dans lequel sont déposées des préformes de fibres sèches. Une résine est ensuite injectée et l'ensemble est polymérisé par cuisson de sorte que ces préformes créent un stratifié épousant la forme interne du moule.

Chaque élément de fuselage comprend une paroi fermée 1 délimitant un volume interne. Cette paroi fermée 1 délimite par conséquent une surface externe 2 sur 360° qui profitant de l'état de surface du moule, peut par conséquent être lisse. Cette surface externe 2 est destinée à former la peau externe du fuselage d'aéronef.

A la Figure 2 est représentée une vue en coupe de cette paroi 1 le long de l'axe longitudinal 3, ou principal, de l'élément de fuselage, cet axe principal 3 passant en son centre 4. Cette coupe comporte du côté du volume interne une partie médiane 5 plane, un élément de liaison femelle 6 à une de ses extrémités et un élément de liaison mâle 7 à son autre extrémité. Ces éléments de liaison 6, 7 sont placés en saillie par rapport à la partie médiane 5 plane.

Chaque élément de liaison 6, 7 de cet élément de fuselage est destiné à coopérer avec l'élément de liaison correspondant d'un autre élément de fuselage placé bord à bord avec celui-ci en vue de solidariser longitudinalement l'un à l'autre ces éléments de fuselage. Ainsi deux éléments de fuselage étant placés bord à bord en vue de leur assemblage, l'élément de liaison femelle 6 coopère avec l'élément de liaison mâle 7 pour assurer l'emboîtement de ces éléments de fuselage.

L'assemblage par emboîtement de deux éléments de fuselage est donc réalisé du côté du volume interne. Cela permet avantageusement d'optimiser chaque élément de fuselage en fonction des sollicitations associées à la zone de fuselage d'aéronef où il est destiné à être placé.

L'élément de liaison femelle 6 comporte ici un décrochement 8 destiné à recevoir l'élément de liaison mâle 7 et une marche 9 formant un cadre du fuselage. Le décrochement 8 de la paroi par rapport à sa partie médiane 5 plane, est placé entre cette partie médiane 5 et la marche 9 formant un cadre. La marche 9 formant un cadre est donc également décalée par rapport à la partie médiane 5.

Le décrochement 8 constitue une seconde marche de hauteur bien inférieure à la hauteur de la marche 9 formant un cadre. Le moule pour réaliser ces éléments de fuselage étant unique, la seconde marche 8 est de hauteur constante. L'élément de liaison mâle 7 est par conséquent une surépaisseur de hauteur constante, comme représentée sur la Figure 2, de sorte que cette surépaisseur couvre les épaisseurs de peau de tous les éléments de fuselage ainsi assemblés, ces épaisseurs de peau pouvant quant à elles varier d'un élément de fuselage à un autre. Cette surépaisseur permet de s'assurer de la précision d'ajustement à l'emboîtement.

Les éléments de liaison 6, 7 sont continus sur tout le tour de la paroi fermée 1.

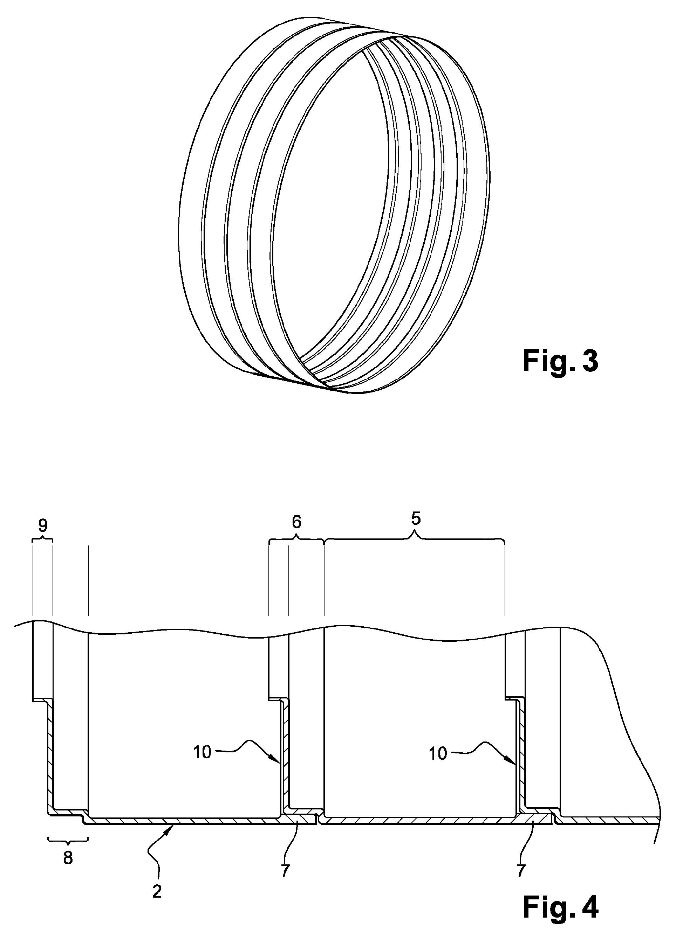

Les Figure 3 et 4 montrent un ensemble d'éléments de fuselage assemblés entre eux pour former un tronçon de fuselage. Ces éléments de fuselage sont solidarisés par collage, rivetage ou co-cuisson. Un joint d'étanchéité 10 est de plus disposé pour assurer l'étanchéité de chaque jonction des éléments de liaison 6, 7 de deux éléments de fuselage successifs ainsi assemblés.

La partie supérieure du décrochement 8 étant droite et horizontale, et étant placée entre la marche 9 formant un cadre du fuselage et la partie médiane plane 5, elle est solidaire d'une traverse (non représentée). La traverse de plancher fait ainsi partie intégrante de l'élément de fuselage et elle est reprise directement sur le bord tombé 9, ou marche, faisant cadre.

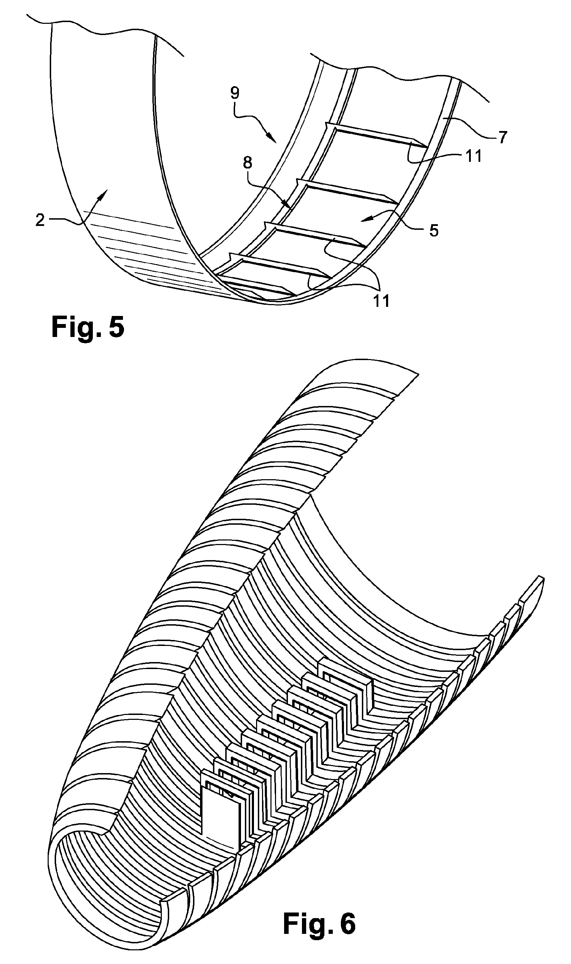

La Figure 5 est une vue en perspective et élargie d'un élément de fuselage selon un deuxième mode de réalisation de l'invention. Les éléments de la Figure 5 portant les mêmes références que les éléments des Figures 1 à 4 représentent les mêmes objets. Ils ne seront donc pas décrits de nouveau. Cet élément de fuselage diffère en ce qu'il intègre des portions de lisse 11. Ces portions de lisse 11 s'étendent sur la partie médiane 5 et sur le décrochement 8.

On limite ainsi les opérations d'assemblage à des jonctions circonférentielles, ce qui est moins coûteux. La paroi doit toutefois transmettre l'intégralité des efforts au niveau de la jonction entre deux éléments de fuselage.

La figure 6 est une vue éclatée et en perspective d'une pointe avant réalisée à partir d'éléments de fuselage selon un troisième mode de réalisation de l'invention. Certains de ces éléments de fuselage intègrent chacun une portion de case de train avec ses renforts de palier complémentaire de sorte qu'après assemblage de ces éléments, la pointe avant comporte directement la case de train.

## Revendications

1. Elément de fuselage d'aéronef, **caractérisé en ce que**
- ledit élément de fuselage étant d'un seul tenant et ayant un axe longitudinal, il comprend une paroi fermée (1) délimitant un volume interne, la surface externe (2) de ladite paroi formant la peau externe dudit fuselage,
- ladite paroi présente une coupe le long dudit axe longitudinal comportant du côté dudit volume interne une partie médiane (5) plane qui est parallèle audit axe longitudinal, un élément de liaison mâle (7) à une première extrémité et un élément de liaison femelle (6) à son autre extrémité, lesdits éléments de liaison (6, 7) étant placés en saillie dans le volume interne, chacun desdits éléments de liaison étant destiné à coopérer avec l'élément de liaison correspondant d'un autre élément de fuselage placé bord à bord audit élément de fuselage en vue de solidariser longitudinalement l'un à l'autre ces éléments de fuselage,
- ledit élément de liaison femelle (6) présentant un décrochement (8) de la paroi, vers le volume interne, par rapport à sa partie médiane (5), ledit élément de liaison mâle (7) forme une surépaisseur destinée à être reçu au moins partiellement dans ledit décrochement (8),
- un desdits éléments de liaison (6, 7) comprend une marche (9) formant un cadre dudit fuselage.

2. Elément selon la revendication 1, **caractérisé en ce que** ledit élément de fuselage étant en matériau composite, lesdits éléments de liaison mâle (7) et femelle (6) sont continus ou non sur tout le tour de ladite paroi fermée (1).

3. Elément selon l'une des revendications 1 ou 2, **caractérisé en ce que** ledit décrochement (8) forme une seconde marche dans le volume interne de hauteur inférieure à ladite marche (9) formant un cadre du fuselage.

4. Elément selon l'une quelconque des revendications 1 à 3, **caractérisé en ce que** ledit décrochement (8) est relié à ladite partie médiane (5) par une dénivellation destinée à compenser la différence de hauteur entre ledit décrochement (8) et ladite partie médiane (5).

5. Elément selon l'une quelconque des revendications 1 à 4, **caractérisé en ce que** la partie supérieure dudit décrochement (8) étant droite et horizontale, et étant placée entre ladite marche (9) formant un cadre dudit fuselage et ladite partie médiane (5), elle est solidaire d'une traverse.

6. Elément selon l'une quelconque des revendications 1 à 5, **caractérisé en ce qu'**il comprend de plus un objet choisi dans le groupe comprenant, un encadrement de hublot, une portion de case de train, une portion de case de train avec ses renforts de palier et une portion de case de train avec ses renforts de palier et ledit palier, ledit objet étant placé en saillie du côté dudit volume interne.

7. Elément selon l'une quelconque des revendications 1 à 6, **caractérisé en ce qu'**il comporte des portions de lisse (11) placées au moins sur la partie médiane (5) de ladite paroi.

8. Fuselage d'aéronef, **caractérisé en ce qu'**il comprend des éléments de fuselage selon l'une quelconque des revendications 1 à 7, solidarisés longitudinalement les uns aux autres.

9. Aéronef équipé d'au moins un élément de fuselage selon l'une quelconque des revendications 1 à 7.

## Patentansprüche

1. Luftfahrzeugrumpfelement, **dadurch gekennzeichnet, dass**
- das Rumpfelement, das aus einem Stück besteht und eine Längsachse hat, eine geschlossene Wand (1) enthält, die ein Innenvolumen begrenzt, wobei die Außenfläche (2) der Wand die Außenhaut des Rumpfs formt,
- die Wand einen Schnitt entlang der Längsachse aufweist, der auf der Seite des Innenvolumens einen ebenen Mittelteil (5), der parallel zur Längsachse ist, ein Steckverbindungselement (7) a n **einem ersten Ende undein** Aufnahmeverbindungselement (6) an seinem anderen Ende aufweist, wobei die Verbindungselemente (6, 7) in das Innenvolumen vorstehend angeordnet sind, wobei jedes der Verbindungselemente dazu bestimmt ist, mit den entsprechenden Verbindungselement eines anderen Rumpfelements zusammenzuwirken, das auf Stoß mit dem Rumpfelement angeordnet ist, um diese Rumpfelemente in Längsrichtung fest miteinander zu verbinden,
- das Aufnahmeverbindungselement (6) einen Rücksprung (8) der Wand zum Innenvolumen bezüglich ihres Mittelteils (5) aufweist, wobei das Steckverbindungselement (7) eine Überdicke formt, die dazu bestimmt ist, zumindest teilweise im Rücksprung (8) aufgenommen zu werden,
- eines der Verbindungselemente (6, 7) eine Stufe (9) enthält, die einen Rahmen des Rumpfes formt.

2. Element nach Anspruch 1, **dadurch gekennzeichnet, dass** das Rumpfelement aus Verbundmaterial ist, wobei die Steck- (7) und Aufnahmeverbindungselemente (6) um die ganze geschlossene Wand (1) herum durchgehend sind oder nicht.

3. Element nach einem der Ansprüche 1 oder 2, **dadurch gekennzeichnet, dass** der Rücksprung (8) eine zweite Stufe im Innenvolumen mit einer geringeren Höhe als die einen Rahmen des Rumpfes formende Stufe (9) formt.

4. Element nach einem der Ansprüche 1 bis 3, **dadurch gekennzeichnet, dass** der Rücksprung (8) mit dem Mittelteil (5) durch eine Absenkung verbunden ist, die dazu bestimmt ist, den Höhenunterschied zwischen dem Rücksprung (8) und dem Mittelteil (5) zu kompensieren.

5. Element nach einem der Ansprüche 1 bis 4, **dadurch gekennzeichnet, dass** der obere Teil des Rücksprungs (8), der gerade und waagrecht ist und sich zwischen der einen Rahmen des Rumpfs formenden Stufe (9) und dem Mittelteil (5) befindet, fest mit einem Querträger verbunden ist.

6. Element nach einem der Ansprüche 1 bis 5, **dadurch gekennzeichnet, dass** es außerdem einen Gegenstand enthält, der aus der Gruppe ausgewählt wird, die **einen Bullaugenrahmen, einen Fahrgestellkastenabschnitt, einen** Fahrgestellkastenabschnitt mit seinen **Lagerverstärkungen** u n d **einen** Fahrgestellkastenabschnitt mit seinen Lagerverstärkungen und dem Lager enthält, wobei der Gegenstand auf der Seite des Innenvolumens vorstehend angeordnet ist.

7. Element nach einem der Ansprüche 1 bis 6, **dadurch gekennzeichnet, dass** es Querleistenabschnitte (11) aufweist, die mindestens auf dem Mittelteil (5) der Wand angeordnet sind.

8. Luftfahrzeugrumpf, **dadurch gekennzeichnet, dass** er Rumpfelemente nach einem der Ansprüche 1 bis 7 enthält, die in Längsrichtung fest miteinander verbunden sind.

9. Luftfahrzeug, das mit mindestens einem Rumpfelement nach einem der Ansprüche 1 bis 7 ausgestattet ist.

## Claims

1. Aircraft fuselage element, **characterized in that**
- said fuselage element consisting of a single piece and having a longitudinal axis, it comprises a closed wall (1) delimiting an inner volume, the outer surface (2) of said wall forming the outer skin of said fuselage,
- said wall has a section along said longitudinal axis comprising, on the side of said inner volume, a flat middle portion (5) which is parallel to said longitudinal axis, a male connecting element (7) at a first end and a female connecting element (6) at its other end, said connecting elements (6, 7) being positioned such that they project into the inner volume, each of said connecting elements being designed to engage with the corresponding connecting element of another fuselage element positioned edge to edge with said fuselage element in order to secure these fuselage elements to one another in the longitudinal direction,
- said female connecting element (6) having a setback (8) in the wall, towards the inner volume, with respect to its middle portion (5), said male connecting element (7) forms a region of increased thickness designed to be at least partially received in said setback (8),
- one of said connecting elements (6, 7) comprises a step (9) forming a frame of said fuselage.

2. Element according to Claim 1, **characterized in that**, said fuselage element being made of composite material, said male (7) and female (6) connecting elements are continuous or non-continuous all around said closed wall (1).

3. Element according to either of Claims 1 and 2, **characterized in that** said setback (8) forms a second step, into the inner volume, of height less than said step (9) forming a frame of the fuselage.

4. Element according to any one of Claims 1 to 3, **characterized in that** said setback (8) is connected to said middle portion (5) by a change in level designed to compensate for the height difference between said setback (8) and said middle portion (5).

5. Element according to any one of Claims 1 to 4, **characterized in that**, the upper portion of said setback (8) being straight and horizontal and being positioned between said step (9) forming a frame of said fuselage and said middle portion (5), it is secured to a crosspiece.

6. Element according to any one of Claims 1 to 5, **characterized in that** it also comprises an object selected from the group comprising a window frame, a portion of a landing gear bay, a portion of a landing gear bay with its bearing supports and a portion of a landing gear bay with its bearing supports and said bearing, said object being positioned such that it projects on the side of said inner volume.

7. Element according to any one of Claims 1 to 6, **characterized in that** it comprises stringer portions (11) positioned at least on the middle portion (5) of said wall.

8. Aircraft fuselage, **characterized in that** it comprises fuselage elements according to any one of Claims 1 to 7 which are secured to one another in the longitudinal direction.

9. Aircraft equipped with at least one fuselage element according to any one of Claims 1 to 7.
